# EUROPÄISCHE PATENTANMELDUNG

(11) **EP 1 632 347 A1**
(43) Veröffentlichungstag der Anmeldung: **08.03.2006**
(21) Anmeldenummer: 05405496.0
(22) Anmeldetag: 25.08.2005
(51) Int. Cl.: B32B 37/12, B32B 37/10

(54) **Verfahren und Vorrichtung zum Verbinden flächiger Materialien**

(30) Priorität: 03.09.2004 CH 14592004
(71) Anmelder: SCHAETTI AG, 8304 Wallisellen (CH)
(72) Erfinder: Welter, Christian, 9245 Oberbüren (CH); Busenhart, Peter, 8542 Wiesendangen (CH)
(74) Vertreter: Schneider Feldmann AG Patent- und Markenanwälte

(57) **Zusammenfassung**

In der Vorrichtung (1) zum Verbinden flächiger Materialien (51, 52) wird in einer Heissschmelzmassen-Auftragsstation (20) eine erste Warenbahn (51) mit einer Heissschmelzmasse beschichtet. Anschliessend wird die erste Warenbahn (51) mit einer zweiten Warenbahn (52) kontaktiert. In einer Bandpresse (30) wird der Kontakt zwischen den beiden Warenbahnen (51, 52) fixiert. So wird die Verarbeitung von Kombinationen aus Materialien und Klebern möglich, die bisher nicht oder kaum in Frage kamen. Die Warenbahnen (51, 52) werden schonend behandelt. Es wird eine bessere Verbindungsqualität bei einer höheren Prozessgeschwindigkeit erzielt. Es wird ein breiter Anwendungsbereich zugänglich gemacht, indem das Prozessfenster bezüglich der Parameter Druck, Zeit und Temperatur erweitert wird.

## Beschreibung

Die vorliegende Erfindung betrifft ein Verfahren und eine Vorrichtung zum Verbinden flächiger Materialien, insbesondere von Warenbahnen aus vorzugsweise textilen Materialien, gemäss den Oberbegriffen der unabhängigen Patentansprüche.

Es ist bekannt, ein flächiges Material mit einer Heissschmelzmasse - auch Hotmelt genannt - zu beschichten. Direkt anschliessend kann eine Verklebung mit einer zweiten Warenbahn erfolgen, wobei die beiden Warenbahnen in einem Walzenkaschierwerk zusammengefügt werden. So können z. B. zwei textile Warenbahnen mit einem Heissschmelzkleber zusammengefügt werden. Dieses Verfahren ist jedoch ungeeignet für dicke und dickenelastische Materialien wie Schaumstoffe oder Volumenvlies, weil diese in einem Walzenkaschierwerk zusammengedrückt werden und die Verbindung durch Scheren oder Reissen beschädigt wird. Ausserdem ist bei vielen hochviskosen Klebstoffen die Verweilzeit bzw. Presszeit im Walzenkaschierwerk zu kurz, als dass sich der Heissschmelzkleber in den Warenbahnen verankern könnte.

Ferner sind Bandpressen bekannt, mittels welcher zwei Flächengebilde unter Anwendung von Wärme und Druck verbunden oder laminiert werden. Zur Verklebung wird eine Haftmasse verwendet, die üblicherweise selbst die Gestalt eines Flächengebildes aufweist.

Es ist eine Aufgabe der Erfindung, ein Verfahren und eine Vorrichtung zum Verbinden flächiger Materialien anzugeben, welche neue Anwendungen und eine grössere Freiheit in Bezug auf die verwendeten Kleber zulassen. Es soll eine gute Verbindungsqualität bei einer hohen Prozessgeschwindigkeit erzielt werden. Eine schonende Behandlung der zu verbindenden Materialien soll gewährleistet sein. Die Vorrichtung soll eine kompakte Bauweise haben und auch zur Nachrüstung bestehender Anlagen geeignet sein.

Diese und andere Aufgaben werden gelöst durch das erfindungsgemässe Verfahren und die erfindungsgemässe Vorrichtung, wie sie in den unabhängigen Patentansprüchen definiert sind. Vorteilhafte Ausführungsformen des Verfahrens und der Vorrichtung sind in den abhängigen Patentansprüchen angegeben.

Der Erfindung liegt die Idee zugrunde, eine Heissschmelzmassen-Auftragsstation mit einer Bandpressstation bzw. die in diesen Stationen ausgeführten Verfahren zu kombinieren.

Dementsprechend wird im erfindungsgemässen Verfahren zum Verbinden flächiger Materialien eine Fläche eines ersten flächigen Materials mit einer Heissschmelzmasse beschichtet und mit einer Fläche eines zweiten flächigen Materials in Kontakt gebracht. Der Kontakt zwischen den beiden flächigen Materialien wird in einer Bandpresse fixiert.

Die erfindungsgemässe Vorrichtung zum Verbinden flächiger Materialien beinhaltet Beschichtungsmittel zum Beschichten einer Fläche eines ersten flächigen Materials mit einer Heissschmelzmasse und Kontaktiermittel zum Kontaktieren der beschichteten Fläche des ersten flächigen Materials mit einer Fläche eines zweiten flächigen Materials. Ferner beinhaltet die Vorrichtung eine Bandpresse zum Fixieren des Kontaktes zwischen den beiden flächigen Materialien.

Die Beschichtungsmittel können einen Rotationsauftragskörper, z. B. eine Gravurwalze oder eine Rotationssiebdruckschablone, beinhalten. In einer bevorzugten Ausführungsform der Erfindung ist die Relativgeschwindigkeit der Gravurwalze zur Warenbahn variabel. Diese Eigenschaft erlaubt es, dieselbe Gravurwalze in einer Vielzahl von Anwendungen einzusetzen, ohne dass die Gravurwalze ausgewechselt werden müsste. Dadurch wird eine grosse Flexibilität erreicht. Die Umrüstzeiten werden wesentlich verkürzt, weil ein Auswechseln der Gravurwalze entfällt, was wiederum kostensenkend wirkt. Es kann auch ein und dieselbe Gravurwalze während einer Umstellung auf eine andere Anwendung im Beschichtungsmodul auf hoher Temperatur gehalten werden, wodurch ein Aushärten der Heissschmelzmasse auf der Gravurwalze vermieden wird. Das Auftragsgewicht (worunter in dieser Schrift die aufgetragene Masse pro Fläche verstanden wird; auch Beschichtungsstärke genannt) wird in dieser Ausführungsform durch die Relativgeschwindigkeit zwischen Gravurwalze und vorbeiziehender Warenbahn bestimmt. Diese Relativgeschwindigkeit kann positiv oder negativ sein. Die Veränderung der Relativgeschwindigkeit kann z. B. durch eine Veränderung der Drehgeschwindigkeit der Gravurwalze erzielt werden. In einer bevorzugten Ausführungsform ist nicht nur die Drehgeschwindigkeit, sondern auch die Drehrichtung der Gravurwalze veränderbar. Dadurch kann problemlos die Relativgeschwindigkeit und damit auch das Auftragsgewicht um einen Faktor 100 verändert werden. Die Veränderung und Regelung einer Drehgeschwindigkeit ist technisch viel anspruchsloser als die Veränderung und Regelung eines Abstandes von heissen Walzen. Dieser Vorteil fällt besonders beim Umgang mit Heissschmelzmasse ins Gewicht, wo die Temperaturverhältnisse eine genaue Kontrolle von Abständen erheblich erschweren. Ausserdem erfolgt das Dosieren der Heissschmelzmasse mit einem einfachen Rakelsystem, was eine sehr gleichmässige Bereitstellung der Heissschmelzmasse in Längs- und Querrichtung gewährleistet.

Gravurwalzen wurden bisher in der Anwendung Heissschmelzbeschichtung/Kaschierung im annähernd schlupffreien Synchronlauf mit der Warenbahn für eine 1:1-Übertragung des Gravurmusters auf die Warenbahn verwendet. Die bevorzugte Ausführungsform der vorliegenden Erfindung stösst diesen Grundsatz um, indem sie einen Asynchronlauf und somit eine Verreibung des Gravurmusters auf der Warenbahn zulässt. Dieser Verreibungseffekt war bisher im Zusammenhang mit Gravurwalzen beim Heissschmelzverfahren absolut unerwünscht, weil eine gravurgetreue Auftragung erzielt werden sollte. Auch in dieser Hinsicht eröffnet die vorliegende Erfindung völlig neue Möglichkeiten, indem sie wie bisher eine Übertragung des Gravurmusters (bei gleicher Geschwindigkeit von Gravurwalze und Warenbahn) zulässt, aber auch dessen Verreibung bis hin zu einer homogenen Beschichtung der Warenbahn (bei stark unterschiedlichen Geschwindigkeiten) ermöglicht. Die Relativgeschwindigkeit zwischen der Gravurwalzenoberfläche und der Warenbahn bestimmt dabei die Intensität der Verreibung bzw. Übertragung.

Die Erfindung macht einen breiteren Anwendungsbereich zugänglich, indem sie das Prozessfenster bezüglich der Parameter Druck, Zeit und Temperatur erweitert.

Dank der Erfindung wird die Verarbeitung von Kombinationen aus Materialien und Klebern möglich, die bisher nicht oder kaum in Frage kamen. Die flächigen Materialien werden schonend behandelt, weil in der Bandpressstation verschiedene variable Heiz- und/oder Kühlzonen entlang einer längeren Strecke vorgesehen sein können, so dass die flächigen Materialien mit einer geringeren Intensität beheizt bzw. gekühlt werden und keine Temperaturschocks erleiden. Es wird eine bessere Verbindungsqualität bei einer höheren Prozessgeschwindigkeit erzielt.

Die erfindungsgemässe Vorrichtung ist vorzugsweise in Modulbauweise ausgeführt. Das heisst, dass zumindest ein autonomes Heissschmelzmodul und ein autonomes Bandpressmodul vorhanden sind, welche jeweils eine wohldefinierte Schnittstelle für die Übergabe eines beschichteten flächigen Materials aufweisen. "Autonom" heisst in diesem Zusammenhang, dass die Module jeweils auch für sich allein, voneinander unabhängig, eingesetzt werden können. Die Modulbauweise bietet den zusätzlichen Vorteil, dass die beiden Module auch einzeln oder zusammen mit weiteren Modulen betrieben werden können. Dadurch wird eine multifunktionale Lösung mit grösserem Einsatzbereich zur Verfügung gestellt. Dies trägt dem Bedürfnis nach einer grösseren Flexibilität in der Materialauswahl und den Funktionen der hergestellten Textillaminate und beschichteten Substrate Rechnung und bringt eine Kostenreduktion mit sich. Besonders attraktiv ist dieses Merkmal für Auftrags- oder Lohnfertiger, also Betriebe, welche darauf angewiesen sind, ihre Produktionsanlage innert kurzer Zeit auf die Bedürfnisse verschiedener Auftraggeber umzustellen.

Im Folgenden wird eine bevorzugte Ausführungsform der Erfindung anhand der beiliegenden Zeichnungen detailliert erläutert. Es zeigen schematisch:
- Fig. 1: die erfindungsgemässen Vorrichtung in einer offen gelegten Seitenansicht und
- Fig. 2: die erfindungsgemässe Vorrichtung in einer perspektivischen Ansicht.

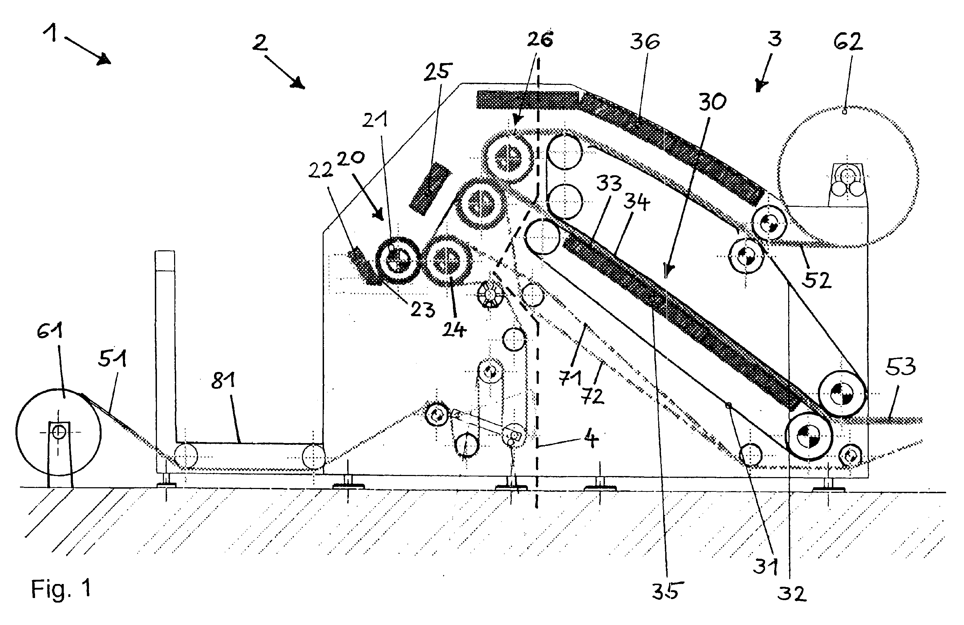

Die in den Zeichnungen dargestellte bevorzugte Ausführungsform der erfindungsgemässen Vorrichtung 1 beinhaltet zwei Module: ein autonomes Heissschmelzmodul 2 und ein autonomes Bandpressmodul 3. Eine Abgrenzung zwischen den beiden Modulen ist in Figur 1 mit einer strichlierten Linie 4 angedeutet. Jedes Modul 2, 3 weist eine wohldefinierte Schnittstelle für die Übergabe eines beschichteten flächigen Materials 51 auf.

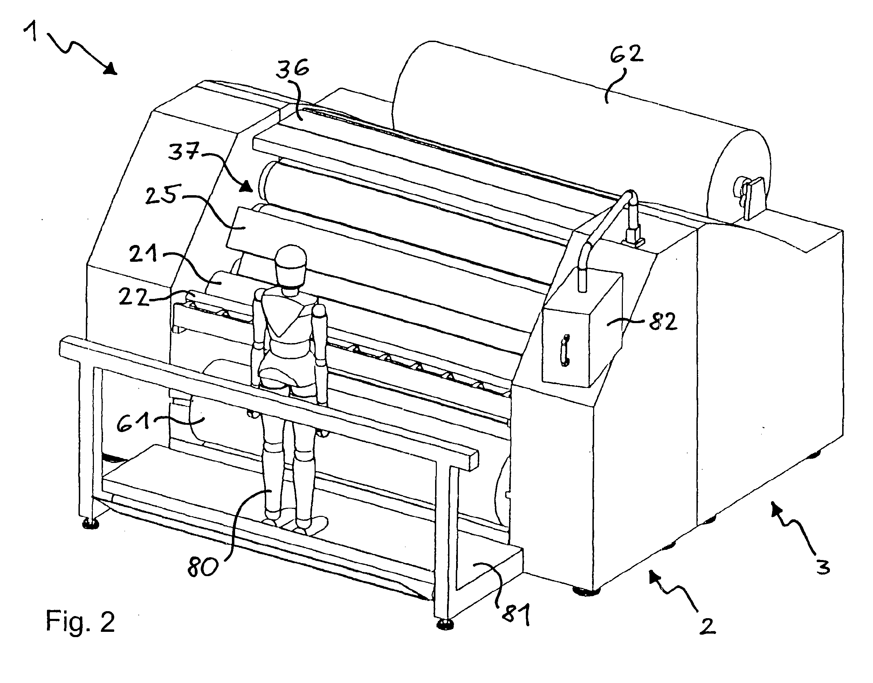

Das Heissschmelzmodul 2 dient der Beschichtung eines ersten flächigen Materials oder Substrats 51 mit einer Heissschmelzmasse. Das erste flächige Material 51 ist in der dargestellten Ausführungsform eine flexible Warenbahn, die von einem ersten Kontaktabwickler 61 abgewickelt und über verschiedene Laufrollen einer Heissschmelzmassen-Auftragsstation 20 zugeführt wird. Es kann ein Tänzer zum Spannungsausgleich und/oder ein Schnurbreithalter für die Breitstreckung der Warenbahn 51 vorhanden sein, wie aus dem Stand der Technik bekannt. Der erste Kontaktabwickler 61 kann ausserhalb des Heissschmelzmoduls 2 (vgl. Fig. 1) oder innerhalb des Heissschmelzmoduls 2 (Alternative; vgl. Fig. 2) angeordnet sein.

In der dargestellten Ausführungsform ist Heissschmelzmassen-Auftragsstation 20 mit einer Gravurwalze 21 ausgestattet, deren Oberfläche - genauer Mantelfläche - mit Vertiefungen zur Aufnahme von Heissschmelzmasse versehen ist. Die Vertiefungen sind vorzugsweise in einem regelmässigen Muster angeordnet und bspw. als Stumpfpyramiden, Diagonalrillen, netzförmig angeordnete Rillen oder Haschur ausgebildet. Die Flächendichte der von der Gravurwalze 21 aufgenommenen Heissschmelzmasse kann bspw. 5-100 g/m² und vorzugsweise 10-40 g/m² betragen. Die Oberfläche der Gravurwalze 21 ist beheizbar und vorzugsweise temperaturgeregelt, damit in den Vertiefungen der Gravurwalze 21 befindliche Heissschmelzmasse exakt auf der benötigten Temperatur gehalten werden kann; bei thermoplastischen Klebern beträgt diese Temperatur typischerweise 220-240 °C. Die Oberfläche der Gravurwalze 21 ist vorzugsweise metallisch, bspw. aus Chrom, kann aber auch nichtmetallisch sein.

In einer bevorzugten Ausführungsform der Erfindung ist in der Heissschmelzmassen-Auftragsstation 20 die Relativgeschwindigkeit der Gravurwalze 21 zur Warenbahn 51 variabel. Diese Relativgeschwindigkeit kann positiv oder negativ sein. Die Veränderung der Relativgeschwindigkeit kann z. B. durch eine Veränderung der Drehgeschwindigkeit der Gravurwalze 21 erzielt werden. Vorzugsweise ist nicht nur die Drehgeschwindigkeit, sondern auch die Drehrichtung der Gravurwalze 21 veränderbar.

Die Heissschmelzmasse wird bspw. über einen beheizten Rakelbalken 22 mittels eines Rakelblatts 23 in die Vertiefungen in der Oberfläche der Gravurwalze 21 eingebracht. Um den beiden möglichen Drehrichtungen der Gravurwalze 21 Rechnung zu tragen, kann das Rakelblatt 23 je nach Drehrichtung verstellbar sein, oder es kann ein (nicht eingezeichnetes) zweites Rakelblatt für die andere Drehrichtung vorgesehen sein.

In unmittelbarer Nähe der Gravurwalze 21 ist eine Gegenwalze 24 angebracht, an welcher die Warenbahn 51 schlupffrei und die Gegenwalze 24 teilweise umschlingend anliegt. Die Gegenwalze 24 ist vorzugsweise als silikonisierte Gummiwalze ausgebildet, kann aber auch z. B. aus Stahl bestehen und mit Chrom oder Teflon beschichtet sein. Die Achsen von Gravurwalze 21 und Gegenwalze 24 verlaufen parallel zueinander, und die Oberflächen von Gravurwalze 21 und Gegenwalze 24 weisen einen wohldefinierten Abstand zueinander auf. Der Abstand ist vorzugsweise mechanisch und/oder elektrisch, bspw. elektromotorisch, verstellbar. Er beträgt je nach Dicke und Beschaffenheit der Warenbahn 5 vorzugsweise zwischen -0.5 mm und +10 mm, wobei ein negativer Abstand bedeutet, dass die Oberfläche der Gegenwalze 24 durch die meist weniger flexible Gravurwalze 21 reversibel deformiert, d. h. eingedrückt, ist. Der Abstand bestimmt den Anlagedruck der Warenbahn 51 an der Gravurwalze 21. Die Gegenwalze 24 kann mit einem eigenen Antrieb ausgestattet sein. Andernfalls kann eine andere Antriebswalze den Transport der Warenbahn 51 bewerkstelligen.

Die Gravurwalze 21 verfügt über (nicht eingezeichnete) Antriebsmittel, bspw. einen eigenen, von demjenigen der Gegenwalze 24 unabhängigen elektromotorischen Antrieb und insbesondere einen Servo- oder Gleichstrommotor, mittels welcher sie in Drehung mit einer einstellbaren Drehgeschwindigkeit versetzbar ist. Die Drehgeschwindigkeit wird während eines Beschichtungsvorgangs vorzugsweise, aber nicht notwendigerweise konstant gehalten. Über die Relativgeschwindigkeit v_{G} - v_{T} zwischen der Oberfläche der Gravurwalze 21 und der Warenbahn 51 wird das gewünschte Auftragsgewicht festgelegt, welches bspw. zwischen 2 g/m² und 200 g/m² und vorzugsweise zwischen 10 g/m² und 100 g/m² beträgt. Um mit ein und derselben Vorrichtung eine grosse Bandbreite von Auftragsgewichten erreichen zu können, soll die Drehgeschwindigkeit der Gravurwalze 21 in einem möglichst grossen Bereich veränderbar sein. Das Verhältnis v_{G}/v_{T} der Geschwindigkeit v_{G} der Oberfläche der Gravurwalze 21 zur Transportgeschwindigkeit v_{T} der Warenbahn 51 soll vorzugsweise zwischen 0.1 und 10 gewählt werden können. In einer bevorzugten Ausführungsform ist eine Drehung der Gravurwalze 21 in beide Richtungen möglich, wodurch noch höhere Relativgeschwindigkeiten v_{G} - v_{T} erreichbar sind. Im Gegenlauf soll das Verhältnis v_{G}/v_{T} der Geschwindigkeit v_{G} der Oberfläche der Gravurwalze 21 zur Transportgeschwindigkeit v_{T} der Warenbahn 51 vorzugsweise zwischen -0.2 und -5 gewählt werden können.

Ein Nachheizelement 25, welches der Heissschmelzmassen-Auftragsstation 20 nachgeschaltet ist, sorgt dafür, dass die aufgetragene Heissschmelzmasse nicht unter eine untere Grenztemperatur von bspw. 160° abkühlt, oder heizt sie auf eine Temperatur auf, die noch höher ist als die Auftragstemperatur, um optimale Bedingungen für das Verbinden zu schaffen. Das Nachheizelement 25 kann bspw. als Infrarotstrahler ausgebildet sein.

Am Ausgang des Heissschmelzmoduls 2 ist im vorliegenden Ausführungsbeispiel ein Kalander 26 mit vorzugsweise zwei Kalanderwalzen vorgesehen. In diesem Kalander 26 werden die beiden Warenbahnen 51, 52 umgelenkt und erstmals miteinander in Kontakt gebracht. Zusätzlich werden im Kalander 26 die beiden Warenbahnen 51, 52 aneinander fixiert und so für die nachfolgende Behandlung im Bandpressmodul 3 vorbereitet. Ein derartiger nachgeschalteter Kalander 26 ist jedoch fakultativ. Die Warenbahnen 51, 52 könnten auch erst in einer Bandpressstation 30 in Kontakt gebracht werden.

Die Gravurwalze 21 ist nur eines von mehreren möglichen Ausführungsbeispielen für die Ausgestaltung der Heissschmelzmassen-Auftragsstation 20. Weitere Ausführungsformen der erfindungsgemässen Vorrichtung 1 können alternativ zur Gravurwalze 21 folgende, dem Fachmann an sich bekannte Heissschmelzmassen-Auftragssysteme aufweisen:
(i) Breitschlitzdüse. Damit ist eine vollflächige, homogene Beschichtung der Warenbahn 51 erreichbar. Das Auftragsgewicht ist über die Austrittsgeschwindigkeit der Heissschmelzmasse und/oder über die Transportgeschwindigkeit der Warenbahn 51 beeinflussbar.
(ii) Mehrwalzenbeschichtung (multiroll coating). Die Heissschmelzmasse wird mittels eines beheizten Walzendosierwerks auf die glatte Oberfläche einer unstrukturierten Auftragswalze aufgebracht und von dieser auf die Warenbahn übertragen. Es wird eine vollflächige Beschichtung der Warenbahn 51 erreicht. Parameter für die Beeinflussung des Auftragsgewichts sind der Abstand zwischen der Auftragswalze und der Warenbahn 51 (bzw. einer Gegenwalze, an welcher die Warenbahn anliegt) sowie die Relativgeschwindigkeit zwischen Auftragswalze und Warenbahn 51.
(iii) Rotationssiebdruck (screening).
(iv) Spinn-Sprühverfahren (melt blow).

Im Bandpressmodul 3 wird das mit der Heissschmelzmasse beschichtete erste flächige Material oder Substrat 51 mit einem zweiten flächigen Material oder Substrat 52 zu einem Laminat 53 verbunden. Das zweite flächige Material 52 kann z. B. eine flexible Warenbahn sein, die von einem zweiten Kontaktabwickler 62 dem ersten flächigen Material 51 zugeführt wird. Es ist von Vorteil, das zweite flächige Material 52 vor dem Zusammenfügen auf eine geeignete Temperatur, vorzugsweise im Bereich der Fixiertemperatur, welche bspw. für Thermoplaste ca. 160 °C beträgt, vorzuheizen. Zu diesem Zweck kann ein Vorheizelement 36, bspw. ein Infrarotstrahler, vorgesehen sein.

Das Bandpressmodul 3 beinhaltet zwei im Wesentlichen übereinander angeordnete Transportbänder oder Gurtförderer 31, 32. In einer Bandpressstation 30 sind zwei Trume 33, 34 der Transportbänder 31, 32 gegeneinander gerichtet und verlaufen im Wesentlichen parallel zueinander. Zwischen diesen Trumen 33, 34 werden die beiden flächigen Materialien 51, 52 unter Anwendung von Wärme und Druck mittels der auf das erste flächige Material 51 bereits aufgetragenen Heissschmelzmasse miteinander verbunden bzw. fixiert.

Die Wärme kann durch mindestens ein Pressheizelement 35 geliefert werden. Ein solches Pressheizelement 35 kann z. B. aus mehreren länglichen Heizprofilen bestehen, die mit geringem Abstand in Transportrichtung nebeneinander angeordnet sind. In Bezug auf ihre Längserstreckungsrichtung sind die länglichen Heizprofile quer zur Transportrichtung ausgerichtet. In Figur 1 ist der Einfachheit halber nur einem unteren Trum 33 ein Pressheizelement 35 zugeordnet; analog kann aber auch einem oberen Trum 34 ein Pressheizelement zugeordnet sein. Ebenso können im Bereich der Bandpressstation 30 (nicht eingezeichnete) Kühlelemente vorgesehen sein. Mit einer geeigneten Abfolge von Pressheiz- und/oder Kühlelementen kann die Temperatur des Laminates 53 entlang seiner Länge und/oder Breite gezielt beeinflusst und kontrolliert werden. Das Laminat 53 kann also ein zeitlich wohldefiniertes Temperaturprofil durchlaufen. In Figur 1 ist stellvertretend nur ein einziges Pressheizelement 35 innerhalb der Bandpressstation 30 eingezeichnet. Es sind jedoch weitere temperaturbeeinflussende Elemente innerhalb des Bandpressmoduls 3 möglich. Dabei kann es sich um Heiz- und/oder Kühlelemente handeln, die innerhalb und/oder ausserhalb der eigentlichen Bandpressstation 30 angebracht sein können. Durch das Vorsehen mehrerer, auf eine möglichst grosse Länge verteilter Heiz- und/oder Kühlzonen wird das Laminat geschont, indem es mit geringeren Heizintensitäten behandelt werden kann und die Übergänge zwischen verschiedenen Temperaturen länger dauern.

Die Trume 33, 34 der Bandpressstation 30 können einen geraden Verlauf, einen einfach gekrümmten Verlauf (z. B. kreisbogenförmig, wie in Figur 1 dargestellt), einen mehrfach gekrümmten Verlauf (z. B. S-förmig) oder eine Kombination davon aufweisen. Ein gekrümmter Verlauf kann den Vorteil haben, bei flexiblen Substraten 51, 52 eine unerwünschte Faltenbildung ohne Anwendung von übermässigem Druck zu verhindern. Der Abstand der Trume 33, 34 muss mit an sich bekannten Mitteln an die jeweilige Anwendung angepasst werden, in Abhängigkeit von der Substratdicke, vom anzuwendenden Druck etc.

Die Heiz- und/oder Kühlelemente können im Bandpressmodul 3 unbeweglich befestigt sein. Alternativ können sie senkrecht zur Ebene des Laminats beweglich sein, um unterschiedliche Laminatsdicken bearbeiten oder einen Dickenausgleich bewerkstelligen zu können. Bei der letzteren Variante kann ein Hub der Heiz- und/oder Kühlelemente einstellbar sein. Die Heiz- und/oder Kühlelemente können auch elastisch gelagert sein, wobei die Richtgrösse (Federkonstante) einstellbar sein kann. Die Heiz- und/oder Kühlelemente können einzeln oder in Gruppen zu mehreren mechanisch miteinander verbundenen Heiz- und/oder Kühlelementen beweglich sein. Es ist auch möglich, bewegliche Heiz- und/oder Kühlelemente vorzusehen, die in einer bestimmten Stellung verriegelbar sind. Entsprechende Mittel zur beweglichen Befestigung der Heiz- und/oder Kühlelemente können mechanisch, pneumatisch, hydraulisch und/oder elektromagnetisch sein.

Der Druck zum Verbinden und Fixieren der beiden flächigen Materialien 51, 52 kann bei der Verarbeitung von besonders druckempfindlichen Materialien 51, 52 reduziert werden, indem der obere Trum 34 berührungslos hochgehalten wird. Dies kann z. B. magnetisch oder pneumatisch (durch Ansaugen) erfolgen. Der Durchhang des oberen Trums 34 wird dadurch beseitigt und eine unerwünscht hohe Druckbeanspruchung der zu verbindenden Materialien 51, 52 vermieden.

Für den Fall, dass die Bandpressstation 30 nicht eingesetzt werden soll, sind Umgehungspfade 71, 72 für die beiden Warenbahnen 51, 52 vorgesehen. Diese verlaufen im vorliegenden Ausführungsbeispiel unterhalb der Bandpressstation 30 und sind in Figur 1 als Phantomlinien dargestellt. Die Möglichkeit einer Umgehung der Bandpressstation 30 erhöht die Flexibilität des Einsatzbereiches der erfindungsgemässen Vorrichtung 1.

Obwohl sich das in den Zeichnungen dargestellte Ausführungsbeispiel auf flexible Flächengebilde 51, 52 wie textile Warenbahnen bezieht, eignet sich die Erfindung auch zum Verbinden von starren oder steifen Substraten wie Stahl, Aluminiumplattenfurnier, Kunststoff oder Vlies. So kann eine starre Platte als zweites flächiges Material 52 in den Kalander 26 eingeführt werden, der im Eingangsbereich des Bandpressmoduls 3 angeordnet ist. Falls das starre flächige Material 52 eben ist, müssen die Trume 33, 34 der Bandpressstation 30 einen geraden Verlauf aufweisen.

Das Heissschmelzmodul 2 und das Bandpressmodul 3 können um weitere (nicht eingezeichnete) Module erweitert werden. Diese weiteren Module können vor, zwischen und/oder nach den oben diskutierten Modulen 2, 3 angeordnet sein. Derartige weitere Module können z. B. ein Zwischenspeicher, eine Schneidstation, ein Transporttisch, ein Aufwickelstation und/oder eine Abwickelstation sein.

Es kann eine Plattform 81 und eine Bedienungseinheit 82 für eine Bedienungsperson 80 vorgesehen sein.

### Bezugszeichenliste:

- 1: Vorrichtung

- 2: Heissschmelzmodul
- 20: Heissschmelzmassen-Auftragsstation
- 21: Gravurwalze
- 22: Rakelbalken
- 23: Rakelblatt
- 24: Gegenwalze
- 25: Nachheizelement
- 26: Kalander

- 3: Bandpressmodul
- 30: Bandpressstation
- 31, 32: Transportbänder
- 33, 34: Trume
- 35: Pressheizelement
- 36: Vorheizelement

- 4: Modulabgrenzung

- 51, 52: erstes bzw. zweites flächiges Material
- 53: Laminat

- 61, 62: Abwickelstationen

- 71, 72: Umgehungspfade

- 80: Bedienungsperson
- 81: Plattform
- 82: Bedienungseinheit

## Patentansprüche

1. Verfahren zum Verbinden flächiger Materialien (51, 52), wobei
eine Fläche eines ersten flächigen Materials (51) mit einer Heissschmelzmasse beschichtet und
mit einer Fläche eines zweiten flächigen Materials (52) in Kontakt gebracht wird,
**dadurch gekennzeichnet,**
**dass** der Kontakt zwischen den beiden flächigen Materialien (51, 52) in einer Bandpresse (30) fixiert wird.

2. Verfahren nach Anspruch 1, wobei die Heissschmelzmasse auf die Fläche des ersten flächigen Materials (51) mittels eines Rotationsauftragskörpers (21), einer Breitschlitzdüse, mit einem Rotationssiebdruckverfahren oder mit einem Spinn-Sprühverfahren aufgebracht wird.

3. Verfahren nach Anspruch 2, wobei die Heissschmelzmasse auf die Fläche des ersten flächigen Materials (51) mittels eines Rotationsauftragskörpers (21), dessen Oberfläche eine Struktur aufweist und temperaturgeregelt wird, aufgebracht wird, indem
das erste flächige Material (51) mit einer Transportgeschwindigkeit an dem Rotationsauftragskörper (21) in Übertragungskontakt vorbei geführt wird,
der Rotationsauftragskörper (21) mit einer Drehgeschwindigkeit gedreht wird,
die Heissschmelzmasse geschmolzen und in die Oberflächenstruktur des Rotationsauftragskörpers (21) eingebracht wird und
die Oberfläche des Rotationsauftragskörpers (21) mit dem ersten flächigen Material (51) in Kontakt gebracht wird, so dass zumindest ein Teil der Heissschmelzmasse von der Oberflächenstruktur des Rotationsauftragskörpers (21) auf die Fläche des ersten flächigen Materials (51) aufgebracht wird, wobei
an der Kontaktstelle von Rotationsauftragskörper (21) und dem ersten flächigen Material (51) die Geschwindigkeit der Oberfläche des Rotationsauftragskörpers (21) und die Geschwindigkeit des ersten flächigen Materials (51) voneinander verschieden sind.

4. Verfahren nach Anspruch 3, wobei an der Kontaktstelle des Rotationsauftragskörpers (21) und des ersten flächigen Materials (51) die Oberfläche des Rotationsauftragskörpers (2) und das erste flächige Material in dieselbe Richtung bewegt werden, und wobei das Verhältnis der Geschwindigkeit der Oberfläche des Rotationsauftragskörpers (21) zur Geschwindigkeit des ersten flächigen Materials (51) vorzugsweise zwischen 0.1 und 10 gewählt wird.

5. Verfahren nach Anspruch 3, wobei an der Kontaktstelle des Rotationsauftragskörpers (21) und des ersten flächigen Materials (51) die Oberfläche des Rotationsauftragskörpers (21) und das erste flächige Material (51) in entgegengesetzte Richtungen bewegt werden, und wobei das Verhältnis der Geschwindigkeit der Oberfläche des Rotationsauftragskörpers (21) zur Geschwindigkeit des ersten flächigen Materials (51) vorzugsweise zwischen -0.2 und -5 gewählt wird.

6. Verfahren nach einem der Ansprüche 3-5, wobei als Rotationsauftragskörper (21) eine Gravurwalze oder eine Rotationssiebdruckschablone verwendet wird.

7. Vorrichtung (1) zum Verbinden flächiger Materialien, beinhaltend
Beschichtungsmittel (20) zum Beschichten einer Fläche eines ersten flächigen Materials (51) mit einer Heissschmelzmasse und
Kontaktiermittel (37) zum Kontaktieren der beschichteten Fläche des ersten flächigen Materials (51) mit einer Fläche eines zweiten flächigen Materials (52),
**gekennzeichnet durch**
eine Bandpresse (30) zum Fixieren des Kontaktes zwischen den beiden flächigen Materialien (51, 52).

8. Vorrichtung (1) nach Anspruch 7, wobei die Beschichtungsmittel (20) einen Rotationsauftragskörper (21), eine Breitschlitzdüse, eine Rotationssiebdruckeinheit oder eine Spinn-Sprüheinheit beinhalten.

9. Vorrichtung (1) nach Anspruch 7, wobei die Beschichtungsmittel (20) einen Rotationsauftragskörper (21), dessen Oberfläche eine Struktur aufweist und temperaturregelbar ist, beinhalten, umfassend erste Antriebsmittel zum Antreiben des Rotationsauftragskörpers (21), derart, dass er mit einer Drehgeschwindigkeit drehbar ist,
Einbringmittel (22, 23) zum Einbringen von geschmolzener Heissschmelzmasse in die Oberflächenstruktur des Rotationsauftragskörpers (21),
Transportmittel (24), mittels welcher das erste flächige Material (51) an dem Rotationsauftragskörper (21) vorbei führbar ist, derart, dass die Oberfläche des Rotationsauftragskörpers (21) mit der Fläche des ersten flächigen Materials (51) in Kontakt bringbar ist, und
zweite Antriebsmittel zum Fördern des ersten flächigen Materials (51), derart, dass das erste flächige Material (51) mit einer Transportgeschwindigkeit an dem Rotationsauftragskörper (21) vorbei transportierbar ist, wobei
die ersten Antriebsmittel und die zweiten Antriebsmittel derart einstellbar sind, dass an der Kontaktstelle des Rotationsauftragskörpers (21) und des ersten flächigen Materials (51) die Geschwindigkeit der Oberfläche des Rotationsauftragskörpers (21) und die Geschwindigkeit des ersten flächigen Materials (51) voneinander verschieden sind.

10. Vorrichtung (1) nach Anspruch 9, wobei der Rotationsauftragskörper (21) als Gravurwalze oder als Rotationssiebdruckschablone ausgebildet ist.

11. Vorrichtung (1) nach einem der Ansprüche 7-10, wobei die Bandpresse (30) zwei im Wesentlichen übereinander angeordnete Transportbänder (31, 32) aufweist, wobei zwei Trume (33, 34) der Transportbänder (31, 32) gegeneinander gerichtet und im Wesentlichen parallel zueinander verlaufen.

12. Vorrichtung (1) nach Anspruch 11, wobei die Trume (33, 34) einen geraden Verlauf, einen einfach gekrümmten Verlauf, einen mehrfach gekrümmten Verlauf oder eine Kombination davon aufweisen.

13. Vorrichtung (1) nach einem der Ansprüche 7-12, wobei die Bandpresse (30) mindestens ein Heizelement (35) und/oder mindestens ein Kühlelement beinhaltet.

14. Vorrichtung (1) nach einem der Ansprüche 7-13, wobei der Bandpresse (30) ein Kalander (37) vorgeschaltet ist.

15. Vorrichtung (1) nach einem der Ansprüche 7-14, wobei die Beschichtungsmittel (20) in einem Heissschmelzmodul (2) und die Bandpresse (30) in einem Bandpressmodul (3) untergebracht sind, welche beiden Module (2, 3) autonom sind und jeweils eine wohldefinierte Schnittstelle für die Übergabe des beschichteten ersten flächigen Materials (51) aufweisen.
